# EUROPEAN PATENT APPLICATION

(11) **EP 3 449 987 A1**
(43) Date of publication of application: **06.03.2019**
(21) Application number: 17196721.9
(22) Date of filing: 16.10.2017
(51) Int. Cl.: A63H 33/04, A63F 9/00, G09B 1/06

(54) **BUILDING BLOCK AND BUILDING BLOCK TOY SET**

(30) Priority: 30.08.2017 JP 2017165490
(71) Applicant: Agatsuma Co., Ltd., Taito-ku Tokyo (JP)
(72) Inventor: TODOKORO, Shinji, Taito-ku, Tokyo (JP)
(74) Representative: Gill Jennings & Every LLP

(57) **Abstract**

To provide a building block which small children can enjoy playing with without getting boring therewith, there is provided a building block having a first surface which is formed into the shape of a figure copied from a letter or number, a second surface which is formed into the shape of a figure which results from reversing the first surface, and a side surface which is formed continuously along outer circumferences of the first surface and the second surface between the first surface and the second surface, and the side surface includes a flat surface portion.

## Description

The present invention relates to a building block and a building block toy set with which players can enjoy playing a game of piling building blocks.

There have conventionally been disclosed building blocks which a player can enjoy playing with by piling them. For example, Japanese Unexamined Patent Publication No. 2015-229000 discloses a set of building blocks which includes blocks which are formed by cutting out one of six corners of a hexahedron and blocks which are formed by cutting out two of six corners of a hexahedron which do not lie adjacent to each other. In these building blocks which make up the set of building blocks, centers of gravity are offset from centers of the building blocks, so that players can enjoy a balance game in which the players are required to pile the unbalanced building blocks.

When small children play with the building blocks disclosed in Japanese Unexamined Patent Publication No. 2015-229000, they may have difficulty from time to time in understanding that although the building blocks have the same shape, the centers of gravity are located in different positions. Thus, small children have difficulty in understanding instinctively how to balance the building blocks of different centers of gravity, and hence, they may have difficulty from time to time in enjoying playing the balance game using those building blocks. Additionally, when two or several players play the balance game by piling the building blocks in turn, they tend to get bored with the game since they only pile the blocks of the same shapes.

The invention has been made in view of the drawbacks described above, and an object thereof is to provide a building block which small children can enjoy playing with without getting boring with playing therewith and a building block toy set which even two or several players can enjoy playing with.

According to an aspect of the invention, there is provided a building block comprising a first surface which is formed into the shape of a figure copied from a letter or number, a second face which is formed into the shape of a figure resulting from reversal of the first face, and a side surface which is formed continuously along outer circumference of the first surface and the second surface between the first surface and the second surface, wherein the side surface comprises a flat surface portion.

According to another aspect of the invention, there is provided a building block toy set having a plurality of building blocks like the building block described above first surfaces of which are formed into the shapes of figures copied from different letters or numbers and comprising a plurality of cards having letters or numbers written on one side thereof and corresponding to the letters or numbers of the building blocks.

According to the aspects of the invention, it is possible to provide the building block which small children can enjoy playing with without getting boring with playing therewith and the building block toy set which even two or several players can enjoy playing with.

Examples of building blocks and building block toy sets in accordance with the invention will now be described with reference to the accompanying drawings, in which -
Fig. 1A is a perspective view of a building block according to an embodiment of the invention as seen from a first surface side.
Fig. 1B is a perspective view of the building block according to the embodiment of the invention as seen from a second surface side.
Fig. 2 shows front views of building blocks which make up a set of building blocks according to the embodiment of the invention as seen from a first surface side.
Fig. 3 shows rear views of the building blocks which make up the set of building blocks according to the embodiment of the invention as seen from a second surface side.
Fig. 4 shows a building block toy set according to the embodiment of the invention.

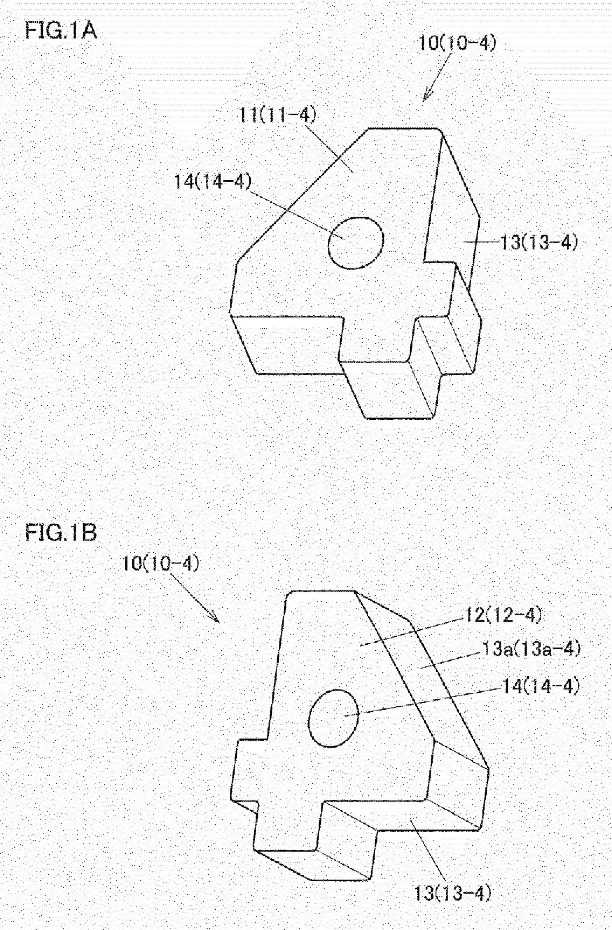

Next, a preferred embodiment of the invention will be described by reference to the drawings. Figs. 1A and 1B show a building block 10 as an example of a building block, and this building block 10 is formed into something like a flat plate which is formed into the shape of a figure copied from a cardinal number, "4." Although the building block 10 is made of wood in this embodiment, the building block 10 can be made of other materials such as plastic and metal.

As shown in Fig. 1A, a first surface 11 is provided on a front side of the building block 10. On the other hand, as shown in Fig. 1B, a second surface 12 is provided on a rear side of the building block 10 which is an opposite side to the first surface 11. The first surface 11 and the second surface 12 are formed flat and are disposed parallel to each other.

The first surface 11 is formed into the shape of a figure copied from a cardinal number "4." The second surface 12 is formed into the shape of a figure resulting when the cardinal number "4" is reversed or is seen from a rear side thereof. In other words, the second surface 12 is formed into the shape of a figure which results from reversing the first surface 11.

Further, the building block 10 includes a side surface 13. The side surface 13 is formed along outer circumferences of the first surface 11 and the second surface 12 between the first surface 11 and the second surface 12.

On the other hand, the first surface 11 and the second surface 12 are formed in almost the same size. Consequently, the side surface 13 is formed substantially normal to the first surface 11 and the second surface 12. Then, the side surface 13 includes at least partially a flat surface portion. In this embodiment in which the building block 10 is copied from the cardinal number "4," at least a portion of the side surface 13 which corresponds to an inclined left upper portion of the cardinal number "4" is formed into a flat surface portion, which constitutes a flat surface portion 13a which supports the building block 10 when it is caused to stand alone, that is, a self-supporting flat surface portion 13a.

The self-supporting flat surface portion 13a is a flat surface portion which is formed flat enough to support the building block 10 when it is caused to stand alone by itself when the building block 10 is placed with the self-supporting flat surface portion 13a left in contact with a resting surface.

A hole portion 14 is made in a center of the building block 10. The hole portion 14 penetrates the building block 10 from the first surface 11 to the second surface 12. The hole portion 14 has a circular shape. Thus, the hole portion 14 can be easily made by drilling the building block 10.

The hole portion 14 can also be formed into an elliptic shape in addition to the circular shape. In this case, too, an elliptic hole portion 14 can be easily made through milling by the use of an end mill.

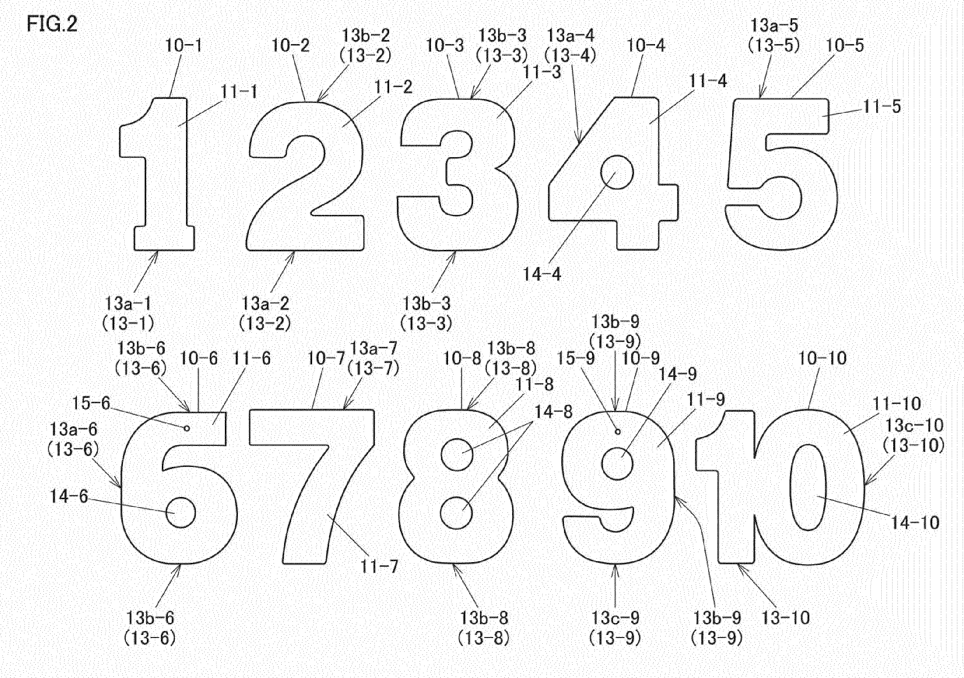

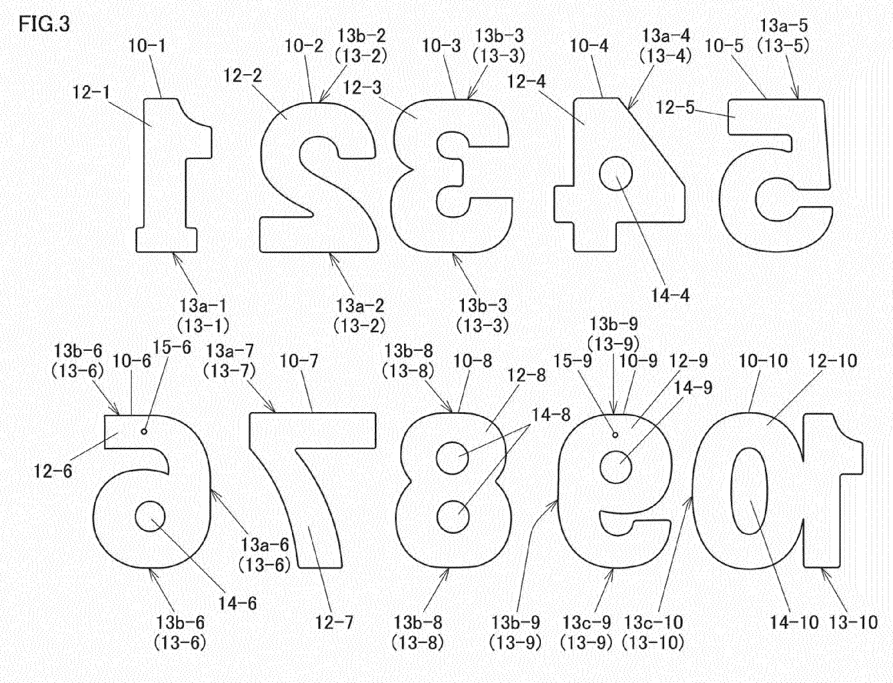

As shown in Figs. 2 and 3, by forming building blocks like the building block 10 which is formed in the way described above, an assortment of 10 building blocks can be arranged. The 10 building blocks are formed into the shapes of figures copied from cardinal numbers of "1" to "10."

Designations of reference numerals given in Figs. 2 and 3 are similar to those of the reference numerals given in Figs . 1A and 1B. 10-1 to 10-10 denote building blocks, 11-1 to 11-10 denote first surfaces, and 12-1 to 12-10 denote second surfaces. Additionally, 13-1 to 13-10 denote side surfaces, and 14-4, 14-6, 14-8, 14-9 and 14-10 denote hole portions.

In addition, self-supporting flat surface portions 13a (13a-1, 13a-2, 13a-4, 13a-5, 13a-7) are formed on the building blocks 10-1, 10-2, 10-4, 10-5, 10-7 as flat surface portions on which the building blocks 10-1, 10-2, 10-4, 10-5, 10-7 can stand alone.

On the other hand, in the side surface 13, curved surface continuing flat surface portions 13b (13b-2, 13b-3, 13b-6, 13b-8, 13b-9) which continue to curved side surfaces 13 are formed on the building blocks 10-2, 10-3, 10-6, 10-8, 10-9.

The building block 10-10 is formed into a figure copied from the cardinal number of "10" which is a combination of the cardinal number of "1" and a cardinal number of "0."

Here, in the building block 10-6 which is formed into the shape of the figure copied from the cardinal number of "6" and the building block 10-9 which is formed into the shape of the figure copied from the cardinal number of "9," in order to discriminate the building block 10-6 from the building block 10-9, small holes 15-6, 15-9, which function as direction indicators, are provided as marks which denote upper sides of the building blocks. The small holes 15-6, 15-9 are circular holes which penetrate the building blocks 10-6, 10-9 from the first surfaces 11-6, 11-9 to the second surfaces 12-6, 12-9. Thus, the small holes 15-6, 15-9 can be easily made by drilling the building blocks 10-6, 10-9.

In addition to the small holes 15-6, 15-9, which are adopted as the direction indicators in this embodiment, marks can be printed on the building blocks 10-6, 10-9 as direction indicators. However, by making the penetrating small holes 15-6, 15-9 as the direction indicators as done in this embodiment, the direction indicators can be made in the first surfaces 11 and the second surfaces 12 at the same time by drilling the building blocks 10-6, 10-9.

Further, the building block 10-10 which is formed into the shape of the figure copied from the cardinal number of "10" has an elliptic hole portion 14-10. As described above, the elliptic hole portion 14-10 can be easily made through milling by the use of the end mill.

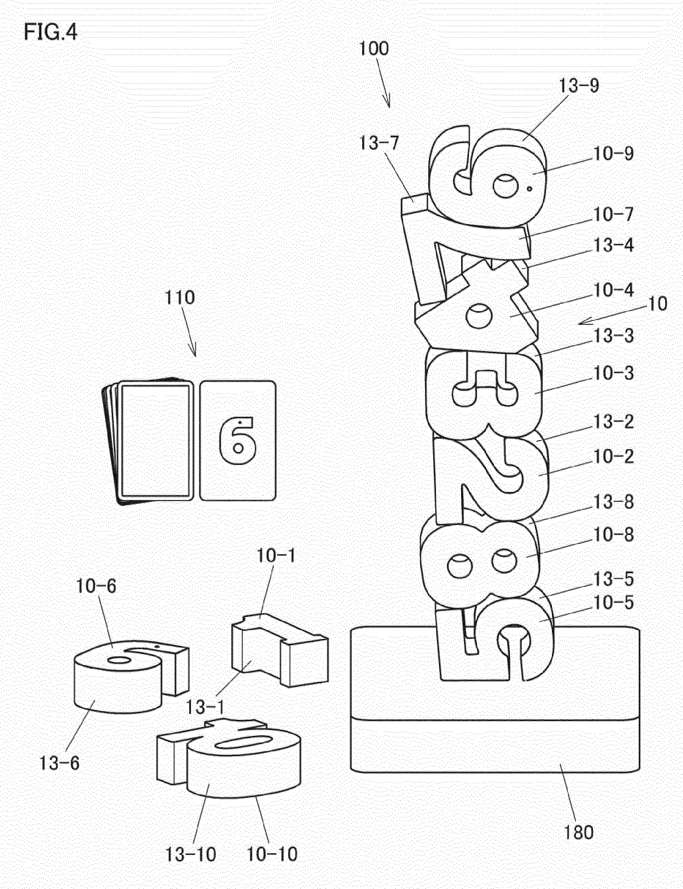

Next, referring to Fig. 4, a building block toy set 100 will be described which includes the building blocks 10 (10-1 to 10-10). The building block toy set 100 includes the assortment of building blocks 10 (10-1 to 10-10), a plurality of cards 110 and a building block platform 180.

Letters corresponding to the letters (the cardinal numbers in this embodiment) into which the building blocks 10 are formed are written on one side of the plurality of cards 110. In this embodiment, 10 cards 110 are prepared, and cardinal numbers of "1" to "10" corresponding to the cardinal numbers on the first surfaces 11 (11-1 to 11-10) of the building blocks 10 are written on the cards 110. The other surfaces of the plurality of cards 110 all have the same pattern as a pack of playing cards do.

The building block platform 180 is formed into the shape of a flat plate. The building blocks 10 are piled up on this building block platform 180. Cuts may be made on an upper surface of the building block platform 180 so as to stabilize the building blocks 10 which are rested on the building block platform 180.

An example of how to play with the building block toy set 100 will be described as below. A plurality of players can play with the building block toy set 100. In an initial stage of a play, the plurality of cards 110 are stacked in a pile with one of the surface sides (that is, the surface side on which the cardinal numbers are written) placed to face downwards. In the initial stage of the play, no building block is rested on the building block platform 180.

An order in which the plurality of players draw a card 110 one at a time from the pack of cards is determined first, and the players draw their cards according to the order determined. When one player draws a card 110, he or she selects the building block 10 which is formed into the figure copied from the same letter (cardinal number) as that written on the card 110 drawn. For example, when the player draws a card on one side of which "6" is written, he or she selects the building block 10-6.

The player who has selected and taken the building block 10-6 then places it on the upper surface of the building block platform 180 in such a way that a certain portion of the side surface 13 of the building block 10-6 rests on the upper surface of the building block platform 180. Then, a second player who has selected and taken another building block 10 according to a card which he or she has drawn piles the building block 10 taken on the building block 10-6 which has already been piled on the upper surface of the building block platform 180 by the first player in such a way that the side surface 13 of the building block 10 rests on the side surface 13 of the building block 10-6.

To describe this specifically, in the building block toy set of this embodiment (shown in Fig. 4), when a first player draws a card 110 on which a cardinal number of "5" is written, he or she takes the building block 10-5 which is formed into the figure copied from the cardinal number of "5." Then, the first player places the building block 10-5 on the building block platform 180 in such a way that a left-hand side portion of the side surface 13-5 comes into contact with the building block platform 180. Then, when a second player draws a card 110 on which a cardinal number of "8" is written, he or she takes the building block 10-8 and places it on the building block 10-5 in such a way that a right-hand side portion of the side surface 13-8 of the building block 10-8 comes into contact with a right-hand side portion of the side surface 13-5 of the building block 10-5.

In this way, the players can play with the building block toy set 100 by drawing the cards 110 one at a time and piling the building blocks 10 which correspond to the cardinal numbers written on the cards drawn in such a way that the side surfaces 13 of the building blocks 10 come into contact with each other.

Then, when anyone of the players piles the building block 10 which he or she selects and takes on the building block 10 which has already been piled on the other building blocks, in case the building block 10 which is piled last falls, the player who piles the last building block becomes a loser of the game.

Here, since the first surfaces 11 of the building blocks 10 are formed into the shapes of the figures copied from the cardinal numbers, the side surfaces 13 of the building blocks 10 include individually various curved surfaces and flat surfaces. Thus, the piling work of the building blocks 10 contains a puzzling element, and since the players can also place their building blocks in such a way that the following player has difficulty in piling his or her building block 10, the building toy set 100 includes a high gaming property.

For example, in the case of the building blocks 10 whose side surfaces 13 include curved surface portions 13c which are made up of curved surfaces only (for example, curved surface portions 13c-9, 13c-10 of the building blocks 10-9, 10-10), when the player places the building block 10-9 or 10-10 in such a way that the curved surface portion 13c comes into contact with the building block 10 which has already been piled on the other building blocks 10 or the building block platform 180, the building block or building blocks 10 which are piled on the building block 10-9 or 10-10 are caused to swing, this allowing the players to play a suspenseful game.

On the other hand, in the case of the building blocks 10 whose side surfaces 13 include the flat surface portions or more particularly the self-supporting flat portions 13a (10-1, 10-2, 10-4, 10-5, 10-7), when the players pile these building blocks 10 in such a way that the self-supporting flat surface portions 13a come into contact with the building block 10 which has already been piled on the other building blocks 10 or the building block platform 180, the building block or building blocks 10 which are piled on the building block 10 (10-1, 10-2, 10-4, 10-5 or 10-7) are allowed to remain stabilized. Thus, many people from children to adults can enjoy playing with the building block toy set 100.

Additionally, in the case of the building blocks 10 whose side surfaces 13 include the flat surface portions or more particularly the curved surface continuing flat portions 13b (10-2, 10-3, 10-6, 10-8, 10-9), when the players pile these building blocks 10 in such a way that the curved surface continuing flat surface portions 13b come into contact with the building block 10 which has already been piled on the other building blocks 10 or the building block platform 180, the building blocks 10 can be placed with intermediate stability which is less unstable than when the building blocks 10 are piled on the building block 10 which is piled with its curved surface portion 13c placed in contact with the building block 10 below or the building block platform 180 but is less stable than when the building blocks 10 are piled on the building block 10 which is piled with its self-supporting surface portion 13a placed in contact with the building block 10 below or the building block platform 180.

Further, the building blocks 10 can be piled in such a way that two or more locations of the side surfaces 13 such as the corner portion, part of the flat surface and part of the curved surface come into contact with the side surface 13 of the building block 10 below or the building block platform 180.

In addition, the players can learn the letters (in this embodiment, the cardinal numbers) which are written on the cards by selecting the building blocks 10 which are formed into the shapes of the figures copied therefrom. Thus, since small children can learn the letters while enjoying playing the game, they can continue to play with the building block toy set without getting boring therewith.

Furthermore, since the building block toy set 100 using some 10 building blocks 10 can be provided, a winner or a loser can be determined without spending a long time. Therefore, when adults play with this building block toy set 100 in a party, they can get a suitable play time. The number of building blocks 10 is not limited to 10 but can be increased more. As this occurs, it is possible to provide a building block and a building block toy set which give more difficulty in playing therewith and which require players to play over a longer time.

Thus, while the embodiment of the invention has been described heretofore, the invention is not limited to the embodiment and hence can be carried out while being modified variously. For example, in the embodiment, the building blocks 10 have the first surfaces 11 which are formed into the shapes of the figures copied from the cardinal numbers. However, the invention is not limited thereto, and hence, letters of various languages (English letters (alphabets), Chinese letters), patterns, symbols and the like can be used as the letters. Further, different series of related building blocks (for example, cardinal numbers of "1" to "10," alphabetical letters from A to Z, and the like) can be arranged into an assortment of building blocks. Alternatively, for example, building blocks which are formed into the shapes of figures copied from cardinal numbers and building blocks which are formed into the shapes of figures copied from letters can be arranged into an assortment of building blocks in a mixed fashion. In the embodiment, the first surfaces 11 and the second surfaces 12 are formed in almost the same size, and the side surfaces 13 are made to lie substantially normal to the first surfaces 11 and the second surfaces 12 therebetween. However, the invention is not limited thereto, and hence, one of the first surfaces 11 and the second surfaces 12 may be formed greater than the other.

## Claims

1. A building block having a first surface which is formed into the shape of a figure copied from a letter or number, a second surface which is formed into the shape of a figure which results from reversing the first surface, and a side surface which is formed continuously along outer circumferences of the first surface and the second surface between the first surface and the second surface, wherein the side surface comprises a flat surface portion.

2. The building block according to Claim 1, wherein
the flat surface portion is a self-supporting flat surface portion which enables the building block to stand alone when the building block is placed on a resting surface in such a way that the flat surface portion comes into contact with the resting surface.

3. The building block according to Claim 1 or 2, wherein
the flat surface portion is a curved surface continuing flat surface portion which is formed so as to continue to or to be continued from a curved surface.

4. The building block according to any one of Claims 1 to 3, wherein
the first surface and the second surface are each formed into the shape of a flat plate, and the first surface and the second surface are formed in the same size.

5. The building block according to any one of Claims 1 to 4, wherein
the letter or number is any one of a cardinal number, a letter such as an English or Chinese letter, a pattern and a symbol.

6. The building block according to any one of Claims 1 to 5, having a hole portion which penetrates the building block from the first surface to the second surface, wherein
the hole portion is formed into a circular shape or an elliptic shape.

7. A building block toy set having a plurality of building blocks, each in accordance with any one of Claims 1 to 6, first surfaces of which are formed into the shapes of figures copied from different letters or numbers, and comprising a plurality of cards having letters or numbers written on one side thereof and corresponding to the letters or numbers of the building blocks.

8. The building block toy set according to Claim 7, comprising a building block platform which is formed into the shape of a flat plate and on which the building blocks can be placed.
